# NEUE EUROPÄISCHE PATENTSCHRIFT

(11) **EP 2 128 047 B2**
(45) Veröffentlichungstag und Bekanntmachung des Hinweises auf die Entscheidung über den Einspruch: **28.10.2015**
(45) Hinweis auf die Patenterteilung: 02.05.2012
(21) Anmeldenummer: 09007041.8
(22) Anmeldetag: 27.05.2009
(51) Int. Cl.: B65G 1/04, B66F 9/00

(54) **Aufnahmevorrichtung für ein Förderfahrzeug und Verfahren zur deren Benutzung**
Holder device for a transport vehicle
Dispositif de réception pour un véhicule transporteur

(30) Priorität: 27.05.2008 AT 8442008
(43) Veröffentlichungstag der Anmeldung: 02.12.2009
(73) Patentinhaber: TGW Mechanics GmbH, 4600 Wels (AT)
(72) Erfinder: Miranda, Febres Patricio, 4600 Wels (AT); Lindley, Timothy, 4600 Wels (AT)
(74) Vertreter: Ofner, Clemens

(56) Entgegenhaltungen:
- EP-A- 1 180 491
- EP-A1- 1 180 491
- EP-A1- 1 431 237
- DE-A1- 2 416 089
- DE-A1- 4 400 829
- DE-A1- 9 413 142
- DE-A1- 10 322 989
- DE-A1-102006 049 411
- DE-A1-102009 044 297
- US-A- 5 434 366
- Kundenzeitschrift Drive In "20/2008", Seiten 20/21
- Produktbroschüre "Boxer" von Fa. Stöcklin
- Auszug aus "Jahrbuch Logistik 2008"
- Auszug aus Zeitschrift "Hebezeuge und Fördermittel, Berlin (2004)
- Auszuge aus "Handbuch Materialflusstechnik Stuckgutförderer" 2. Auflage 2003, Kapitel 7 "Kettenförderer"

## Beschreibung

Die Erfindung betrifft eine Lastaufnahmevorrichtung wie sie im Oberbegriff des Anspruches 1 beschrieben ist und ein Verfahren wie es im Oberbegriff des Anspruches 13 beschrieben ist.

Aus dem Dokument EP 1 180 491 A1 ist ein Regalbediengerät für ein Ein- und Auslagern von Waren in - und aus einem Regallager, mit einer Vielzahl von Regalfächern, die von einem Regalgang aus zugänglich sind und jeweils mehrere hintereinander liegende Regallagerplätze aufweisen, bekannt. Das Regalbediengerät umfasst eine Plattform mit darauf angeordneter teleskopischen Ein- und Auslagerungsvorrichtung. Zusätzlich ist auf der Plattform zur Verstellrichtung der Ein- und Auslagerungsvorrichtung parallel verlaufend eine Zweispur-Fördereinrichtung als Umsetzförderer mittels der die Waren zwischen verschiedenen Stellplätzen der Plattform umsetzbar sind. Jedem der Stellplätze der Plattform ist eine Hubvorrichtung zum An- und Absenken der Waren zugeordnet, mittels der eine den Stellplatz belegende Ware relativ zu den Waren auf den anderen Stellplätzen für einen Umsortiervorgang heb- und senkbar ist.

Aus einem weiteren Dokument, der DE 44 00 829 A1, ist ein Regalbediengerät für ein Hochlager mit Einlagerungskanälen, die zur Aufnahme mehrerer Lagerbehälter vorgesehen sind, bekannt. Das Regalbediengerät weist eine heb- und senkbare Plattform auf mit einer eine Kanalbreite übersteigende Breite und eine quer dazu verlaufenden Länge mit einen ganzzahligen Vielfachen einer Länge der Lagerbehälter. Die Plattform ist mit einer in Richtung der Einlagerungskanäle ausfahrbaren Fördereinrichtung sowie mehreren dazu in Querrichtung voneinander unabhängig verstellbaren Längsfördermitteln versehen. Weiters weist die Plattform beidseits der Fördereinrichtung eine Zweispur- Fördereinrichtung mit heb- und senkbaren Längsförderer und seitliche Abstellflächen für die mit Waren bestückten Ladehilfsmittel auf.

Aufgabe der Erfindung ist es, eine Lastaufnahmevorrichtung für ein Regalbediengerät zu schaffen, mit der eine rasche und transportsichere Ein- und Auslagerung von unterschiedlichen Formaten von Ladehilfsmitteln mit hoher Umschlagszahl und hoher Transportsicherheit für die Waren erreicht wird.

Diese Aufgabe der Erfindung wird durch die im Kennzeichenteil des Anspruches 1 wiedergegebenen Merkmale erreicht. Der überraschende Vorteil dabei ist, dass durch die Ausbildung der Zweispur- Fördereinrichtung unabhängig davon ob mit dem Regalförderfahrzeug eine Ganzpalette oder eine oder mehr als eine Halbpalette Einzulagern, Auszulagern oder zu Transportieren ist bzw. sind, die Positionierung der Paletten auf der Lastaufnahmevorrichtung an bevorstehende Vorgänge bereits während der Verfahrzeiten des Regalförderfahrzeug angepasst werden kann und damit eine hohe Transport- und Manipulationssicherheit erreicht wird, wie auch durch die Ausbildung der Lastaufnahmevorrichtung mit der Zweispur- Fördereinrichtung mit zumindest vier Längsfördermitteln Vorteile dadurch erzielt werden, dass die mit den Packeinheiten versehenen Ladehilfsmittel unmittelbar durch die Zweispur- Fördereinrichtung, ohne zusätzliche Übergabefördereinrichtungen im Wareneingangs- und Warenausgangsbereich auf die Lastaufnahmevorrichtung übernommen bzw. abgegeben werden können wodurch neben der Einsparung von Fördereinrichtungen auch eine Kostenreduktion durch eine Verringerung der Zykluszeit für den Warenumschlag erreicht wird.

Zudem wird die Standsicherheit auf der Lastaufnahmevorrichtung des Regalförderfahrzeuges, insbesondere bei Halbpaletten und besonders dann, wenn diese von nicht mehr einwandfreier Beschaffenheit sind, wesentlich gesteigert.

Durch den Einsatz von Kettenförderern werden schließlich technisch hochwertige und für Langzeiteinsätze erprobte und wartungsarme Komponenten für die Längsfördermittel und die Stützmittel verwendet, die insbesondere identisch ausgebildet sein können.

Vorteilhaft ist dabei auch eine Ausbildung nach Anspruch 2, wodurch unabhängige Verstellvorgänge zur Positionierung der Ladehilfsmittel auf der Lastaufnahmevorrichtung erreicht werden.

Durch die in den Ansprüchen 3 bis 5 beschriebenen vorteilhaften Ausbildungen wird der mechanische Aufwand für die Lastaufnahmevorrichtung reduziert und durch Einsparung von Komponentengewicht und damit zu bewegende Masse eingespart, wodurch der Energieaufwand für den Betrieb und insgesamt Kosten eingespart werden.

Möglich ist auch eine Ausbildung nach Anspruch 6, wodurch höhere Antriebskräfte auf das Ladehilfsmittel übertragbar sind und damit schnellere Positioniervorgänge erreicht werden.

Vorteilhafte Alternativen in der Ausbildung beschreiben aber auch die Ansprüche 7 bis 8, wodurch unterschiedlichen Anforderungen wie sie durch unterschiedliche Beschaffenheiten des Lager- und Transportgutes vorliegen können, Rechnung zu tragen ist.

Von Vorteil ist auch eine Ausbildung nach Anspruch 9, wonach das zwischen einem Paar der Längsfördermittel angeordnete Stützmittel mit einer Hub- und Absenkeinrichtung versehen ist.

Es sind aber auch Ausbildungen nach den Ansprüchen 10 bis 11 vorteilhaft, wodurch mechanisch einfache Verstelleinrichtungen für eine Vertikalverstellung der Zweispur-Fördereinrichtung erreicht werden.

Durch die im Anspruch 12 beschriebene vorteilhafte Ausbildung wird zumindest ein teilautomatisierter Betrieb der Lastaufnahmevorrichtung erreicht, und zu Störungen im Ablauf Anlass gebende Fehlbedienung weitestgehend vermieden.

Die Erfindung betrifft aber auch ein Verfahren zum Betrieb einer Lastaufnahmevorrichtung wie es im Oberbegriff des Anspruches 13 beschrieben ist.

Entsprechend der Aufgabe der Erfindung, eine rasche und transportsichere Ein- und Auslagerung von unterschiedlichen Formaten von Ladehilfsmitteln mit hoher Umschlagszahl und hoher Transportsicherheit für die Waren zu erreichen, werden entsprechende Maßnahmen gemäß dem Kennzeichenteil des Anspruches 13 angegeben. Der überraschende Vorteil dabei ist, dass durch eine automatisierte Übernahme von Daten und Bildung von Steuerungsparameter unmittelbar und kurzfristig auf die Bewegungs- und Förderungsabläufe reagiert wird, wodurch ein störungssicherer und rascher Ablauf erreicht wird. Zudem wird die Stabilität der Ladung infolge einer gegenseitigen Stützwirkung erhöht. Dies ermöglicht höhere Fahrgeschwindigkeiten des Regalförderfahrzeuges, was zu einer Verkürzung der Zykluszeit des Lagerumschlages führt.

Zum besseren Verständnis der Erfindung wird diese anhand der nachfolgenden Figuren näher erläutert.

Es zeigen jeweils in stark schematisch vereinfachter Darstellung:
- Fig. 1: a, b ein als Hochregallager ausgebildetes Warenlager in vereinfachter Darstellung;
- Fig. 2: die erfindungsgemäße Lastaufnahmevorrichtung in Seitenansicht;
- Fig. 3: die erfindungsgemäße Lastaufnahmevorrichtung, geschnitten gemäß den Linien III-III in Fig. 2;
- Fig. 4: die erfindungsgemäße Lastaufnahmevorrichtung geschnitten gemäß den Linien IV-IV in Fig. 2;
- Fig. 5: eine weitere Ausbildung der erfindungsgemäße Lastaufnahmevorrichtung in Draufsicht;
- Fig. 6: eine vereinfachte Darstellung einer Lastaufnahme bzw. Lastabgabe auf bzw. von der Lastaufnahmevorrichtung eines Regalförderfahrzeuges in Draufsicht;
- Fig. 7: eine vereinfachte Darstellung einer Lastaufnahme bzw. Lastabgabe auf bzw. von der Lastaufnahmevornchtung eines Regalförderfahrzeuges in Ansicht;
- Fig. 8: eine vereinfachte Darstellung zur Positionierung einer Halbpalette auf der Last- aufnahmevorrichtung in Draufsicht;
- Fig. 9: eine vereinfachte Darstellung der Positionierung auf der Lastaufnahmevorrichtung des Regalförderfahrzeuges in Ansicht;
- Fig. 10: eine vereinfachte Darstellung einer weiteren Lastaufnahme auf die Lastaufnahme- vorrichtung des Regalförderfahrzeuges in Draufsicht;
- Fig. 11: eine vereinfachte Darstellung der Lastaufnahme auf der Lastaufnahmevorrichtung des Regalforderfahrzeuges in Ansicht;
- Fig. 12: eine vereinfachte Darstellung einer voll beladenen Lastaufnahmevorrichtung in Draufsicht;
- Fig. 13: eine vereinfachte Darstellung einer voll beladenen Lastaufnahmevorrichtung in Ansicht.

Einführen sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

Sämtliche Angaben zu Wertebereichen in gegenständlicher Beschreibung sind so zu verstehen, dass diese beliebige und alle Teilbereiche daraus mit umfassen, z.B. ist die Angabe 1 bis 10 so zu verstehen, dass sämtliche Teilbereiche, ausgehend von der unteren Grenze 1 und der oberen Grenze 10 mitumfasst sind, d.h. sämtliche Teilbereich beginnen mit einer unteren Grenze von 1 oder größer und enden bei einer oberen Grenze von 10 oder weniger, z.B. 1 bis 1,7, oder 3,2 bis 8,1 oder 5,5 bis 10.

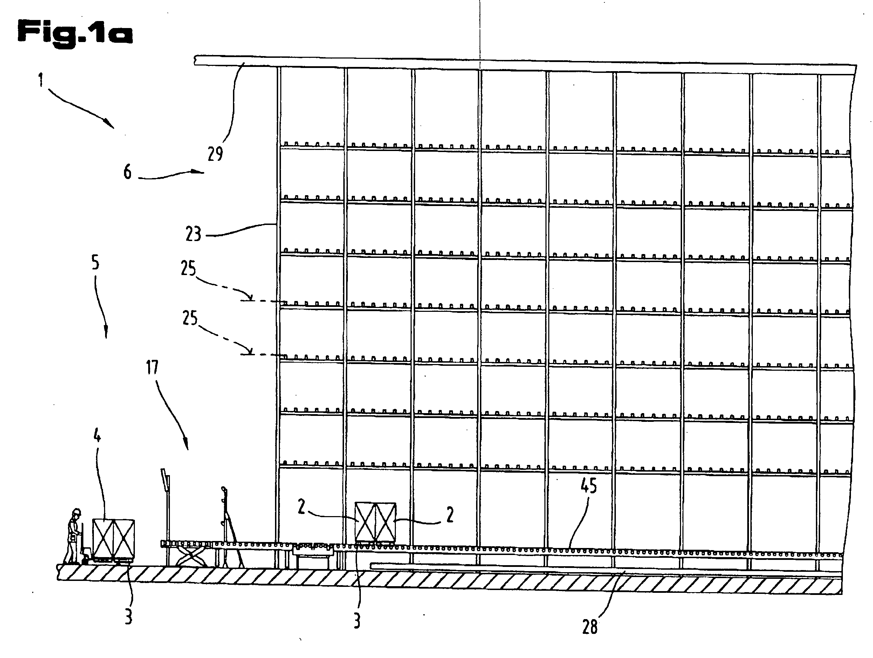

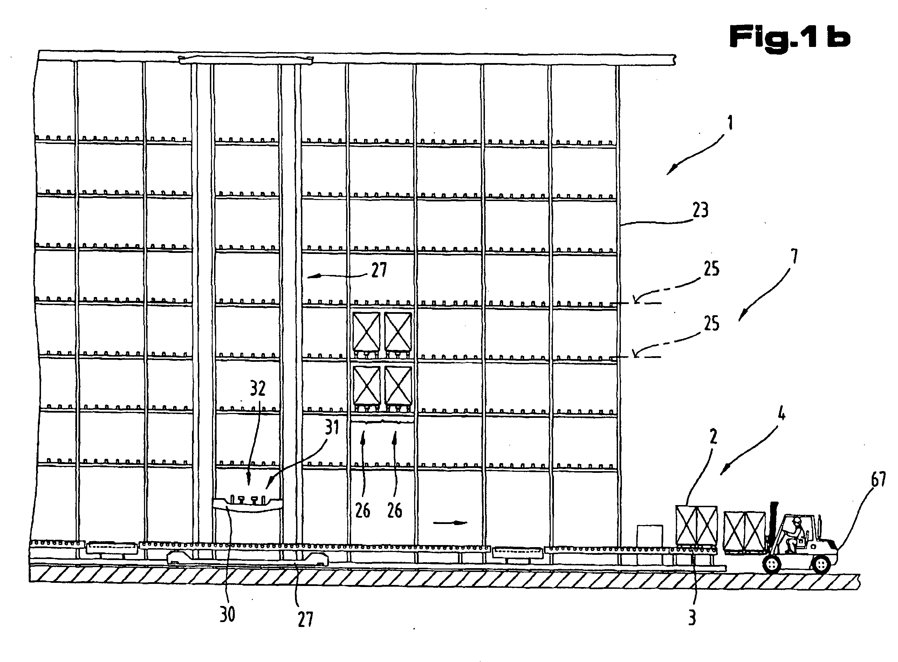

In der Fig. 1 ist ein erfindungsgemäßes Lagersystem 1 zum Konsolidieren von Versandeinheiten 2 in unterschiedlichen Ansichten gezeigt. Die Versandeinheit 2 wird durch ein Ladehilfsmittel 3, beispielsweise eine EURO-Palette, und auf ihm gegebenenfalls sortenrein gestapelte Packeinheiten 4 (Collis), wie etwa Kartons, gebildet.

Das Lagersystem 1 umfasst einen Wareneingang 5, ein Zwischenlager 6, im gezeigten Ausführungsbeispiel ein Hochregallager und einen Warenausgang 7. Zwischen dem Wareneingang 5 und dem Zwischenlager 6 sind weitere im Detail nicht gezeigte Bereiche wie z.B. Eingangspufferzonen und zwischen dem Warenausgang 7 und dem Zwischenlager 6 ein Konsolidierungsbereich sowie ein Versandeinheiten-Verteilsystem. Im Konsolidierungsbereich sind Ausgangspufferzonen vorgesehen. Die Eingangs- und Ausgangspufferzonen weisen jeweils in Reihe hintereinander angeordnete Stellplätze auf, die in einer Ausführung beispielsweise am Boden des Lagergebäudes ausgebildet und durch Markierungen gekennzeichnet sind.

Am Wareneingang 5 sind beispielsweise mehrere Anlieferungsstationen vorgesehen, an denen Lieferanten-Transportfahrzeuge, insbesondere Lastwagen, andocken, und von einem Lagerarbeiter die Versandeinheiten 2 auf einem Verteilwagen übernommen und entweder in einer der Eingangspufferzonen auf wenigstens einem Stellplatz zwischengelagert oder zu einer das Versandeinheiten-Verteilsystem auf einer den Eingangspufferzonen zugewandten Seite aufweisenden Aufgabestation 17 transportiert werden.

Am Wareneingang 5 ist zumindest eine Ein- und/oder Ausgabevorrichtung, die eine optische und/oder akustische Anzeige, beispielsweise einen Bildschirm, umfasst, mittels welcher dem Lenker des Transportfahrzeuges angegeben wird, an welcher Anlieferungsstation er mit seinem Transportfahrzeug andocken muss. Es können aber auch mehrere Ein- und/oder Ausgabevorrichtungen vorgesehen sein.

Das Zwischenlager 6 ist in mehrere Lagermodule aufgeteilt und weist das Versandeinheiten-Verteilsystem in den Lagermodulen jeweils eine automatisierte Fördertechnik auf. Die Lagermodule umfassen jeweils parallel nebeneinander angeordnete Lagerregale 23, wobei zwischen den mit Abstand einander gegenüberliegenden Lagerregalen 23 eine Gasse ausgebildet ist. Die Lagerregale 23 weisen in einem Rasterabstand vertikal übereinander liegende Lagerebenen 25 auf, die beispielsweise mit Tragbalken ausgebildet sind. In jeder Lagerebene 25 sind eine Vielzahl von Lagerkanälen 26 nebeneinander mit je Lagerkanal 26 hintereinander angeordneten Stellplätzen für die Ladehilfsmittel 3 mit den Packeinheiten 4 vorgesehen.

Die automatisierte Fördertechnik weist nach diesem Ausführungsbeispiel ein Regalforderfahrzeug 27, insbesondere Regalbediengerät, auf, welches in der Gasse entlang eines Schienensystems 28, 29 an der Regalfront verfahrbar ist und mit einer heb- und senkbaren Plattform 30 ausgestattet ist. Auf der Plattform 30 ist eine Lastaufnahmevorrichtung angeordnet, die wenigstens eine Fördervorrichtung 31 und eine relativ zur Plattform 30 nach beiden Richtungen ausfahrbare Ein- und Auslagerungsvorrichtung 32, insbesondere Teleskopgabeln, aufweist, mittels welcher Versandeinheiten 2 in einen Lagerkanal 26 des links oder rechts von der Gasse 24 aufgestellten Lagerregals 23 ein- bzw. ausgelagert werden können.

Die Fördervorrichtung 31 ist beispielsweise durch einen Zweispurförderer wie später im Detail beschrieben gebildet. Dieser weist parallel zur Ausfahrrichtung der Ein- und Auslagerungsvorrichtung 32 verlaufende Linearförderer auf, die zu beiden Seiten der Ein- und Auslagerungsvorrichtung 32 angeordnet sind.

Die Ladehilfsmittel 3 bzw. Versandeinheiten 2 weisen unterschiedliche Formatabmessungen auf, beispielsweise 800 mm x 1200 mm oder 800 mm x 600 mm. Die Ein- und Auslagerungsvorrichtung 32 kann entweder eine einzelne Versandeinheit 2 mit der Formatabmessung 800 mm x 1200 mm (Ganzpalette) oder vorzugsweise zwei Versandeinheiten 2 mit den Formatabmessungen 800 mm x 600 mm (Halbpalette) als Pärchen (Versandeinheiten-Gruppe) manipulieren. Die Lagerkanäle 26 sind auf die Abmessung 800 mm zuzüglich eines Abstandes von etwa 50 mm zwischen benachbarten Stellplätzen ausgelegt. Dementsprechend ist auch die Ladeplattform 30 des Regalförderfahrzeuges 27 und die darauf befindliche Fördereinrichtungen für das Format 800 x 1200 mm ausgelegt und kann somit eine Ganzpalette in zur Ein-und Auslagerrichtung Längsausrichtung, oder zwei Halbpaletten in Querausrichtung, aufnehmen.

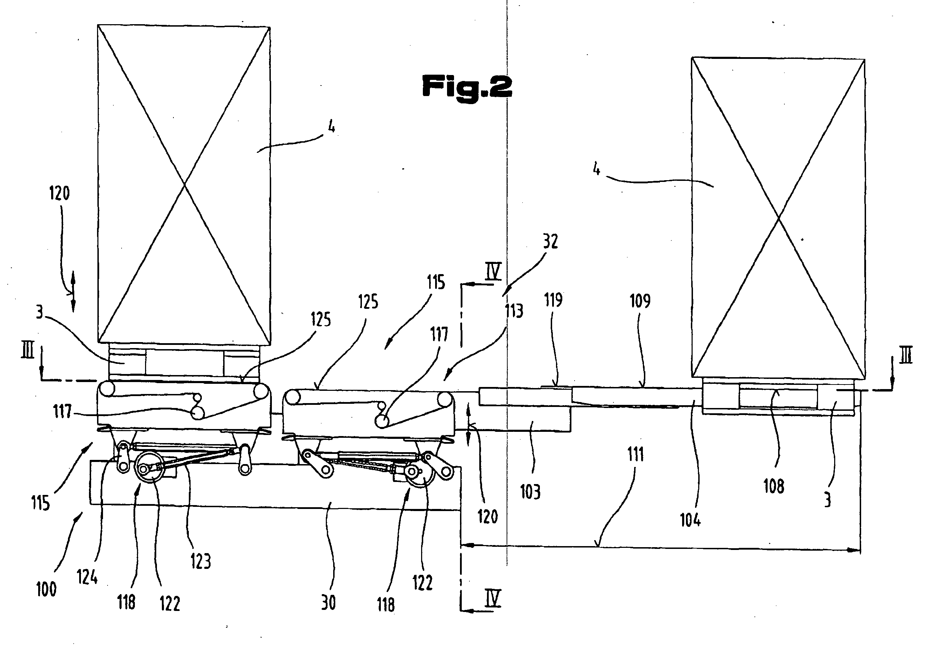

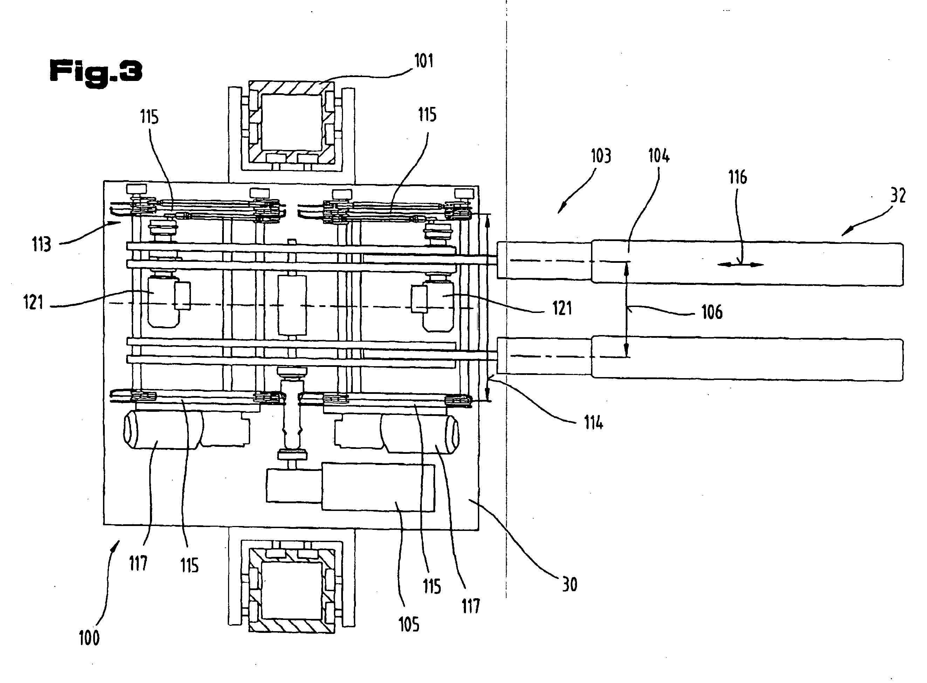

In den Fig. 2 bis 4 ist eine weitere und gegebenenfalls für sich eigenständige Ausführungsform der Lastaufnahmevorrichtung gezeigt, wobei wiederum für gleiche Teile gleiche Bezugszeichen bzw. Bauteilbezeichnungen wie in den vorangegangenen Fig. 1a und 1b verwendet werden. Um unnötige Wiederholungen zu vermeiden, wird auf die detaillierte Beschreibung in den vorangegangenen Fig. 1a bis 1b hingewiesen bzw. Bezug genommen.

In den Fig. 2 bis 4 ist eine Lastaufnahmevorrichtung 100 für das nicht weiter im Detail gezeigte Regalförderfahrzeug 27 mit der Ladeplattform 30 und mit der Fördervorrichtung 31 und der Ein- und Auslagerungsvorrichtung 32 gezeigt. Die Lastaufnahmevorrichtung 100 ist in Führungsanordnungen an Maste 101 und einem nicht weiter dargestellten Antrieb in vertikaler Richtung - gemäß Doppelpfeil 102 - verfahrbar.

Die auf der Ladeplattform 30 angeordnete Ein- und Auslagerungsvorrichtung 32 wird durch zwei parallel zueinander ausgerichtete Mehrfach-Teleskopauszüge 103, mit die Ladehilfsmittel 3 aufnehmenden Tragmitteln 104 gebildet, wobei die Mehrfach-Teleskopauszüge 103 aus einer Mittelstellung der Tragmittel 104 auf der Ladeplattform 30, in entgegengesetzten Richtungen ausfahrbar sind und damit die Tragmittel 104 aus einer Gasse in der das Regalförderfahrzeug 27 verfahrbar ist, die beidseits dazu angeordneten Regalstellplätze bedienen kann.

Die Teleskopauszüge 103 werden über einen auf der Ladeplattform 30 angeordneten Antriebsmotor 105, bevorzugt einen Elektro-Getriebemotor gemeinsam betrieben. Eine Spurweite 106 der Mehrfach-Teleskopauszüge 103 ist für eine Längsaufnahme einer "Ganzpalette" bzw. für eine Queraufnahme einer "Halbpalette" ausgelegt, wobei die Tragmittel 104 jeweils zwischen einer randseitigen und einer mittigen Palettenkufe 107 das Ladehilfsmittel 3 an einer Unterseite 108 auf einer Aufstandsfläche 109 aufnehmen.

Eine Länge 110 der Tragmittel 104 ist für die Längsaufnahme der "Ganzpalette", also auf ca. 1200 mm zzgl. einem Übermaß ausgelegt. Eine Auszugslänge 111 der Mehrfach-Teleskopauszüge 103 ist im gezeigten Ausführungsbeispiel für die Bedienung eines doppeltiefen Lagerregals für zwei bzw. vier Stellplätze 112 von längs eingelagerten "Ganzpaletten" bzw. quer eingelagerten "Halbpaletten" ausgelegt, wobei in der Dimensionierung der Stellplätze ein Zwischenraum zu benachbarten Stellplätzen von ca. 50 mm sowie ein allseitiger Überstand der Packeinheit 4 über das Formatmaß des Ladehilfsmittels 3 berücksichtigt ist.

Auf der Ladeplattform 30 ist weiters die Fördervorrichtung 31, gebildet, aus einer Zweispur-Fördereinrichtung 113 mit einer Spurweite 114 angeordnet, die größer ist als die Spurweite 106 der Mehrfach-Teleskopsauszüge 103 und abgestimmt ist auf die randseitig angeordneten Palettenkufen 107 des Ladehilfsmittels 3.

Die Zweispur-Fördereinrichtung 113 wird durch vier auf der Ladeplattform 30 angeordnete Längsförderer 115 gebildet, von denen jeweils zwei in Ein- bzw. Auslagerungsrichtung gemäß Doppelpfeil 116 - fluchtend hintereinander angeordnet sind und mit den weiteren zwei parallel dazu verlaufenden Längsförderer 115 die Zweispur- Fördereinrichtung 113 paarweise ausbilden. Paarweise sind diese Längsfördermittel jeweils über einen Antriebsmotor 117 antreibbar, wobei die Antriebsmotoren 117 bzw. deren Antriebssteuerung für eine reversible Antriebsrichtung ausgelegt ist.

Weiters sind diese Längsfordermittet 115 paarweise über je eine diesen zugeordnete Hub- und Absenkeinrichtung 118 in zu einer durch die Aufstandsflächen 109 der Tragmittel 104 gebildeten Ebene 119 senkrecht verlaufenden Richtung - gemäß Doppelpfeil 120 - verstellbar auf der Ladeplattform 30 aufgelagert. Die Hub- und Absenkeinrichtung 118 wird im gezeigten Ausführungsbeispiel durch einen Antriebsmotor 121 mit einem Kurbeltrieb 122 und Kurbelgestänge 123 gebildet wobei die Längsfördenmittel 115 der Zweispur- Fördereinrichtung 113 über Schwenkhebel 124 auf der Ladeplattform 30 aufgelagert sind.

Mittels der Hub- und Absenkeinrichtungen 118 der Zweispur-Fördereinrichtung 113 wird eine durch die Längsfördermittel 115 gebildete Förderebene 125 für die Ladehilfsmittel 3 in Bezug auf die Ebene 119 bzw. Aufstandsfläche 109 der Tragmittel 104, unabhängig für jedes Paar der Längsfördermittel 115, zwischen einer Position über der Ebene 119 und einer Position unter der Ebene 119 positionierbar.

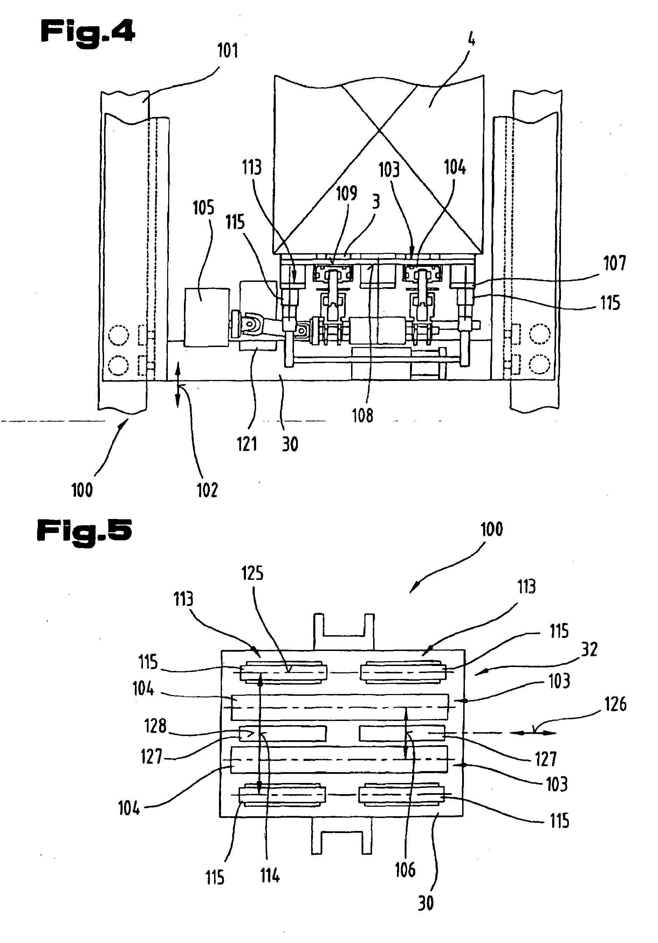

In der Fig. 5 ist eine weitere und gegebenenfalls für sich eigenständige Ausführungsform der Lastaufnahmevorrichtung gezeigt, wobei wiederum für gleiche Teile gleiche Bezugszeichen bzw. Bauteilbezeichnungen wie in den vorangegangenen Fig. 1 bis 4 verwendet werden. Um unnötige Wiederholungen zu vermeiden, wird auf die detaillierte Beschreibung in den vorangegangenen Fig. 1 bis 4 hingewiesen bzw. Bezug genommen.

In dieser Fig. 5 ist die Lastaufnahmevorrichtung 100 mit der Ein- und Auslagerungsvorrichtung 32 und der Zweispur-Fördereinrichtung 113, angeordnet auf der Ladeplattform 30, in stark vereinfachter Darstellung gezeigt. Die Ein- und Auslagemngsvorrichtung 32 besteht aus den zwei Mehrfach-Teleskopauszügen 103 mit den Tragmitteln 104 zur Aufnahme des bzw. der nicht weiter dargestellten Ladehilfsmitteln.

Die Zweispur-Fördereinrichtung 113 wird durch die paarweise in Ein- und Auslagerrichtung - gemäß Doppelpfeil 126 - in fluchtender Ausrichtung zueinander angeordneten Längsfördermitteln 115 gebildet. Die in der Spurweite 114 auf der Ladeplattform 30 positioniert sind die größer ist als die Spurweite 106 der Ein- und Auslagerungsvorrichtung 32.

Im Mittel zwischen den paarweise angeordneten Längsfördermitteln 115 sind in der Ein- und Auslagerungsrichtung - gemäß Pfeil 126 - zueinander fluchtend ausgerichtete Stützmittel 127 auf der Ladeplattform 30 angeordnet, die eine Mittelabstützung der Ladehilfsmittel gewährleisten und damit eine Verformung der Ladehilfsmittel, bedingt durch das auf diese einwirkende Warengewicht, verhindern.

Wesentlich ist dabei, dass die Stützmittel 127 ebenfalls gegenüber der Oberseite der Ladeplattform 30 in vertikaler Richtung mit den Längsrordermitteln 115 der Zweispur-Fördereinrichtung 113 einzeln oder mit diesen gemeinsam synchron mitverstellbar sind. Zwecks Einsparung von Gewicht und zusätzlicher mechanischer Einrichtungen wird dies bevorzugt dadurch erreicht, dass die Stützmittel 127 über die Hub- und Absenkeinrichtung 118 der Zweispur-Fördereinrichtung mitverstellt werden und damit eine Oberseite 128 der Stützmittel 127 immer im gleichen Niveau mit der Förderebene 125 der Längsfördermittel 115 ausgerichtet ist.

Die Längsfördermittel 115 der Zweispur-Fördereinrichtung 113 können selbstverständlich Rollenförderer, Bandförderer, Riemenförderer oder Kettenförderer, in für derartige Einsatzzwecke bekannten Ausbildungen sein.

Die im Mittel zwischen der Zweispur-Fördereinrichtung 113 angeordneten Stützmittel 127 sind bevorzugt nicht angetriebene Rollenbahnen oder Gleitschienen 128 mit reibungsarmer Oberfläche, wie bspw. versehen mit einem Kunststoffbelag oder in metallischer Ausführung.

Für die Antriebe der Längsfördermittel 115 der Zweispur-Fördereinrichtung 113 sowie den Mehrfach-Teleskopauszügen 103 und den Hub- und Absenkeinrichtungen 118 sind bevorzugt elektrisch betriebene Motore, insbesondere Getriebemotore in Anwendung.

Anstelle der beschriebenen Hub- und Absenkeinrichtung 118, in der Ausführung mit den Kurbeltrieb 122, Kurbelgestänge 123 und Schwenkhebel 124 sind auch andere Ausbildungen mit bspw. mit einem Druckmedium beaufschlagte pneumatische oder hydraulische Stellmittel möglich.

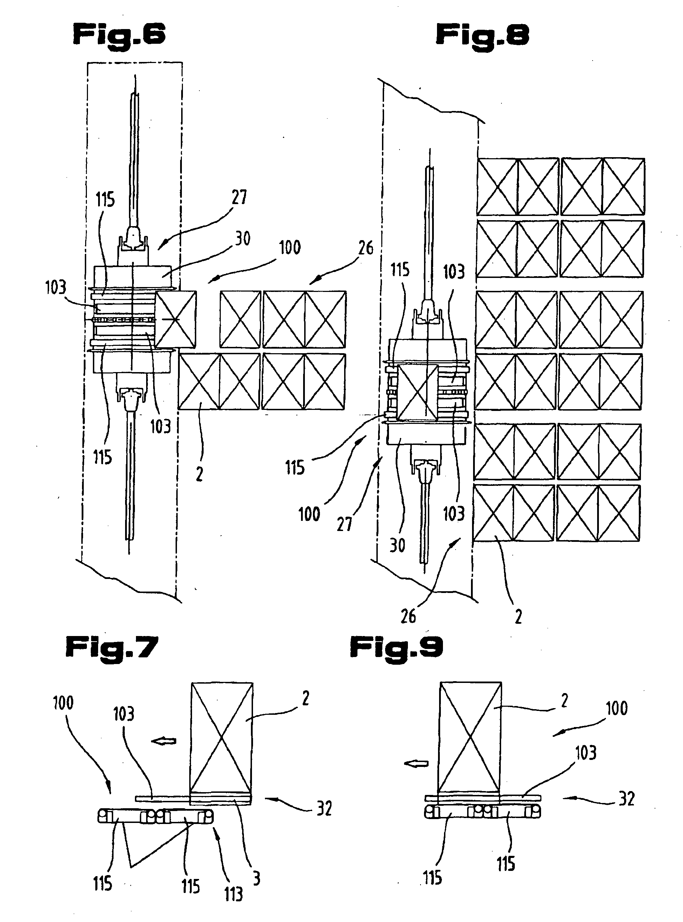

Anhand der Figuren 6 bis 13 wird nachfolgend beispielhaft der Einsatz der Lastaufnahmeeinrichtung 100 des Regalförderfahrzeuges 27 für einen Kommissioniervorgang zur Auslagerung von mit dem Packeinheiten 4 bestückten Ladehilfsmitteln 3 aus Stellplätzen 26 eines nicht weiter im Detail gezeigten Lagerregals für eine Vier-Fachaufnahme in Querrichtung gelagerter "Halbpaletten" oder zweifach längs gelagerter "Ganzpaletten" bzw. einer Kombination von "Halb- oder Ganzpaletten" beschrieben.

Erwähnt wird, dass zur vereinfachten Darstellung, nur eine einseitige Regalaufstellung gewählt wurde es aber üblich ist das Regalförderzeug 27 in einer so genannten Regalgasse mit beiderseitiger Regalbestückung zu betreiben. Es wurde dazu bereits vorhergehend erwähnt, dass die Ein- und Auslagerungsvorrichtung 32 in entgegen gesetzten Richtungen aus der Lastaufnahmevorrichtung 100 ausfahrbar gestaltet ist.

Die Fig. 6 und 7 zeigen das Regalförderfahrzeug 27 mit der Lastaufnahmevorrichtung 100, positioniert auf einen Lagerkanal 26 in welchen vier der "Halbpaletten" in Querrichtung eingelagert sind, wobei eine erste "Halbpalette" mittels der Ein- und Auslagerungsvorrichtung 32 bereits teilweise auf die Lastaufnahmevorrichtung 100 übernommen wurde. Durch Anheben und Antreiben der Längsförderer 115 der Zweispur- Fördereinrichtung 113 wird das Ladehilfsmittel 3 mit der Packeinheit 4 von der Ein- und Auslagerungsvorrichtung 32 übernommen und auf der Lastaufnahmevorrichtung 100, durch Betrieb der Zweispur-Fördereinrichtung 113, positioniert. Dies erfolgt bevorzugt im Zustand bereits eingefahrener Mehrfach-Teleskopauszüge 103 während der Fahrt des Regalförderfahrzeuges 27 in eine weiter Entnahmeposition um damit Leerzeiten zur Verkürzung der Kommissionier-Zykluszeit einzusparen - wie dies in den Fig. 8 und 9 gezeigt ist.

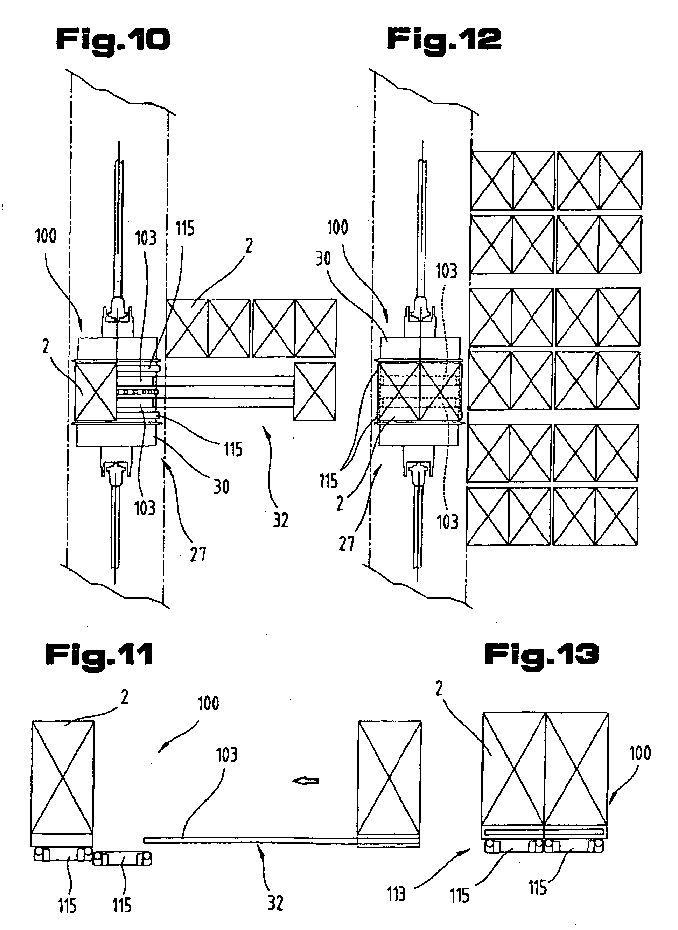

In den Fig. 10 und 11 ist nunmehr das Regalförderfahrzeug mit der Lastaufnahmevorrichtung 100 auf einen weiteren Lagerkanal 26 positioniert, um eine in entfernter Position befindliche "Halbpalette" dem Lagerregal mittels der Ein- und Auslagerungsvorrichtung 32, den Mehrfach-Teleskopauszügen 103, zu entnehmen. Die zuvor auf die Lastaufnahmevornchtung 100 übernommene "Halbpalette" ist in eine vom Lagerregal entfernte Endposition auf der Lastaufnahmevorrichtung 100 und in dem im angehobenen Zustand befindlichen Paar der Längsförderer 115, der Zweispur-Fördereinrichtung 113, positioniert. Die weitere dem Lagerregal zugewandte aus dem Paar der Längsfördermittel 115 gebildete Zweispur-Fördereinrichtung 113 ist im Niveau unterhalb der Aufstandsfläche 109 der Tragmittel 104 verstellt. Wie bereits vorhergehend beschrieben, wird nach erfolgtem Einfahren der Mehrfach-Teleskopauszüge 103, sobald die "Halbpalette" in den Bereich der Lastaufnahmevorrichtung 100 gelangt, das Paar der Längsförderer 115, der Zweispur-Fördereinrichtung 113, angehoben und damit das Ladehilfsmittel 3 von der Zweispur-Fördereinrichtung 113 übernommen. Gleichzeitig werden die Mehrfach-Teleskopauszüge 103 gänzlich eingefahren und damit das Regalförderfahrzeug 27 in Richtung einer nicht weiter dargestellten Abgabevorrichtung für die auf der Lastaufnahmevorrichtung 100 befindlichen Ladehilfsmittel 3 bewegt.

Zu Beginn dieses Vorganges werden die beiden "Halbpaletten" durch Betrieb der beiden Paare der Längsförderer 115 in eine abstandsfreie Position auf der Lastaufnahmevorrichtung 100 gebracht, wodurch die Stabilität der Ladung infolge einer gegenseitigen Stützwirkung erhöht wird. Dies ermöglicht höhere Fahrgeschwindigkeiten des Regalförderfahrzeuges 27, wodurch dies ebenfalls zu einer weiteren Verkürzung der Zykluszeit des Lagerumschlages führt.

Die Positionierung einer aus einem Lagerkanal 26 entnommenen "Ganzpalette" stellt hinsichtlich der Positionierung dieser auf der Lastaufnahmevorrichtung 100 geringere Anforderungen, wobei die Übernahme von der Ein- und Auslagerungsvorrichtung 32 auf die Lastaufnahmevorrichtung 100 durch gleichzeitiges Anheben beider Paare der Zweispur-Fördereinrichtung 113 erfolgt, um mit diesen eine zentrische Stellung des Ladehilfsmittels 3 auf der Lastaufnahmevorrichtung 100 vorzunehmen.

Ob nun jedoch "Halbpaletten" oder "Ganzpaletten" ein- oder ausgelagert werden, oder zwischen dem Wareneingangsbereich, dem Zwischenlager, oder dem Warenausgangsbereich zu transportieren sind, werden Steuerparameter für die Fördereinrichtungen, wie die Ein- und Auslagerungsvorrichtung 32, Zweispur- Fördereinrichtung 113, Hub- und Absenkeinrichtung 118 bevorzugt aus in einem Lagerverwaltungsprogramm hinterlegten Daten generiert und Steuerungsprozesse für den Betrieb des Regalförderfahrzeuges 27 und der Lastaufnahmevorrichtung 100 über eine nicht weiter gezeigte Steuerungseinrichtung entsprechend dem erfindungsgemäßen Verfahren aktiviert.

Der umgekehrte Vorgang zur Einlagerung der "Halb- bzw. Ganzpaletten" in den Lagerkanal 26 erfolgt in umgekehrter Reihenfolge wie zuvor beschrieben durch Übergabe des Ladehilfsmittel durch Absenken der Zweispur-Fördereinrichtung 113 auf die Ein- und Auslagerungsvorrichtung 32 und Verfahren der Mehrfach-Teleskopauszüge 103 und Auflagerung der Ladehilfsmittel im Lagerregal durch Absenken der Lastaufnahmevorrichtung 100, wodurch das Ladehilfsmittel im Lagerkanal 26 auf entsprechende Auflagermittel aufgesetzt wird und wobei eine Positionierung im Lagerkanal auf Abstand der Ladehilfsmittel 3 - wie bereits eingangs beschrieben - erfolgt.

Die Ausf-uhrungsbeispiele zeigen mögliche Ausführungsvarianten der Lastaufnahmevorrichtung 100, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt. Es sind also auch sämtliche denkbaren Ausführungsvarianten, die durch Kombinationen einzelner Details der dargestellten und beschriebenen Ausführungsvariante möglich sind, vom Schutzumfang mit umfasst.

Der Ordnung halber sei abschließend darauf hingewiesen, dass zum besseren Verständnis des Aufbaus der Lastaufnahmevorrichtung diese bzw. deren Bestandteile teilweise unmaßstäblich und/oder vergrößert und/oder verkleinert dargestellt wurden.

Die den eigenständigen erfinderischen Lösungen zugrundeliegende Aufgabe kann der Beschreibung entnommen werden.

Vor allem können die einzelnen in den Fig. 1a, 1b; 2, 3, 4; 5; 6, 7; 8, 9; 10, 11; 12, 13 gezeigten Ausführungen den Gegenstand von eigenständigen, erfindungsgemäßen Lösungen bilden. Die diesbezüglichen, erfindungsgemäßen Aufgaben und Lösungen sind den Detailbeschreibungen dieser Figuren zu entnehmen.

### Bezugszeichenaufstellung

- 1: Lagersystem
- 2: Versandeinheit
- 3: Ladehilfsmittel
- 4: Packeinheit
- 5: Wareneingang

- 6: Zwischenlager
- 7: Warenausgang

- 23: Lagerregal
- 25: Lagerebene

- 26: Lagerkanal
- 27: Regalförderfahrzeug
- 28: Schienensystem
- 29: Schienensystem
- 30: Plattform

- 31: Fördervorrichtung
- 32: Ein- und Auslagerungsvorrichtung

- 106: Spurweite
- 107: Palettenkufe
- 108: Unterseite
- 109: Aufstandsfläche
- 110: Länge

- 111: Auszugslänge
- 112: Stellplatz
- 113: Zweispur-Fördereinrichtung
- 114: Spurweite
- 115: Längsfördermittel

- 116: Doppelpfeil
- 117: Antriebsmotor
- 118: Hub- und Absenkeinrichtung
- 119: Ebene
- 120: Doppelpfeil

- 121: Antriebsmotor
- 122: Kurbeltriebe
- 123: Kurbelgestänge
- 124: Schwenkhebel
- 125: Förderebene

- 126: Doppelpfeil
- 127: Stützmittel
- 128: Oberseite

## Patentansprüche

1. Lastaufnahmevorrichtung (100) für ein Regalförderfahrzeug (27) mit einem auf einer Ladeplattform (30) angeordneten Ein- und Auslagerungsvorrichtung (32) für zumindest ein Ladehilfsmittel (3) für eine Packeinheit (4) von Waren mit auf der Ladeplattform (30) angeordneten teleskopisch verstellbaren Tragmitteln (104) für das Ladehilfsmittel (3) und mit zumindest einer Zweispur-Fördereinrichtung (113) für eine parallel zur Verstellrichtung der Tragmittel (104) verlaufenden Förderrichtung, **dadurch gekennzeichnet,**
- **dass** die Zweispur-Fördereinrichtung (113) durch mindestens vier auf der Ladeplattform (30) angeordnete Längsfördermittel (115) gebildet ist, die in Verstellrichtung der Tragmittel (104) paarweise hintereinander fluchtend auf der Ladeplattform (30) ausgerichtet sind,
- **dass** auf der Ladeplattform (30), bevorzugt im Mittel der Zweispur-Fördereinrichtung (113), zwei parallel zu den Längsfördermitteln (115) verlaufende und in Ein- und Auslagerrichtung zueinander fluchtend ausgerichtete Stützmittel (127) angeordnet sind und
- **dass** die Längsfördermittel (115) und die Stützmittel (127) durch Kettenförderer gebildet sind.

2. Lastaufnahmevorrichtung (100) nach Anspruch 1, **dadurch gekennzeichnet, dass** die Längsfördermittel (115) der Zweispur-Fördereinrichtung (113) und bevorzugt die Stützmittel (127) in zu einer durch eine Aufstandsfläche (109) der Tragmittel (104) gebildeten Ebene (119) senkrechten Richtung verstellbar sind.

3. Lastaufnahmevorrichtung (100) nach einem der vorhergehenden Ansprüche, **dadurch gekennzeichnet, dass** den Längsfördermitteln (115) paarweise ein gemeinsamer Antriebsmotor (121) zugeordnet ist.

4. Lastaufnahmevorrichtung (100) nach einem der vorhergehenden Ansprüche, **dadurch gekennzeichnet, dass** den Längsfördermitteln (115) der Zweispur-Fördereinrichtung (113) paarweise eine gemeinsame Hub- und Absenkeinrichtung (118) zugeordnet ist.

5. Lastaufnahmevorrichtung (100) nach Anspruch 4, **dadurch gekennzeichnet, dass** das in der Mitte zwischen den Längsfördermitteln (115) angeordnete Stützmittel (127) mit der Hub- und Absenkeinrichtung (118) der Längsfördermittel (115) bewegungsverbunden ist.

6. Lastaufnahmevorrichtung (100) nach Anspruch 4, **dadurch gekennzeichnet, dass** das in der Mitte zwischen den Längsfördermitteln (115) angeordnete Stützmittel (127) mit den parallel verlaufenden Längsfördermitteln (115) antriebsverbunden ist.

7. Lastaufnahmevorrichtung (100) nach einem der vorhergehenden Ansprüche, **dadurch gekennzeichnet, dass** jeder der Längsfördermittel (115) der Zweispur-Fördereinrichtung (113) mit einem Antrieb versehen ist.

8. Lastaufnahmevorrichtung (100) nach einem der vorhergehenden Ansprüche, **dadurch gekennzeichnet, dass** jeder der Längsfördermittel (115) der Zweispur-Fördereinrichtung (113) mit einer Hub- und Absenkeinrichtung (118) versehen ist.

9. Lastaufnahmevorrichtung (100) nach einem der vorhergehenden Ansprüche, **dadurch gekennzeichnet, dass** das zwischen einem Paar der Längsfördermittel (115) angeordnete Stützmittel (127) mit einer Hub- und Absenkeinrichtung (118) versehen ist.

10. Lastaufnahmevorrichtung (100) nach einem der vorhergehenden Ansprüche, **dadurch gekennzeichnet, dass** die Längsfördermittel (115) der Zweispur-Fördereinrichtung (113) und/oder die Stützmittel (127) beispielsweise über Schwenkhebeln (124) in der zur Aufstandsfläche der Tragmittel senkrechten Richtung auf der Ladeplattform (30) abgestützt sind.

11. Lastaufnahmevorrichtung (100) nach einem der vorhergehenden Ansprüche, **dadurch gekennzeichnet, dass** eine Antriebsanordnung (121) der Hub- und Absenkeinrichtung (118) durch einen Kurbeltrieb (122) gebildet ist.

12. Lastaufnahmevorrichtung (100) nach einem der vorhergehenden Ansprüche, **dadurch gekennzeichnet, dass** die Antriebe der Längsfördermittel (115) der Zweispur-Fördereinrichtung (113) und/oder der Hub- und Absenkeinrichtung (118) mit einer Antriebsregeleinrichtung des Regalförderfahrzeuges (27) kommunikationsverbunden sind.

13. Verfahren zum Betrieb einer Lastaufnahmevorrichtung (100) für ein Regalförderfahrzeug (27) mit einem auf einer Ladeplattform (30) angeordneten Ein- und Auslagerungsvorrichtung (32) für zumindest ein Ladehilfsmittel (3) für eine Packeinheit (4) von Waren mit auf der Ladeplattform (30) angeordneten teleskopisch verstellbaren Tragmitteln (104) für das Ladehilfsmittel (3) und mit zumindest einer Zweispur-Fördereinrichtung (113) für eine parallel zur Verstellrichtung der Tragmittel (104) verlaufenden Förderrichtung, wobei die Zweispur-Fördereinrichtung (113) durch mindestens vier auf der Ladeplattform (30) angeordnete Längsfördermittel (115) gebildet ist, die in Verstellrichtung der Tragmittel (104) paarweise hintereinander fluchtend auf der Ladeplattform (30) ausgerichtet sind, **dadurch gekennzeichnet, dass** je Ein- und/oder Auslagerungsspiel an die Antriebsregeleinrichtung für die Antriebe der Längsfördermittel (115) der Zweispur- Fördereinrichtung (113) und /oder der Hub- und Absenkeinrichtungen (118) von einer zentralen Betriebssteuereinrichtung des Regalförderfahrzeuges Steuersignale über die nach einem Ein- und Auslagerprogramm vorzunehmende Lastabgabe bzw. Lastaufnahme übermittelt werden und die Ansteuerung der Antriebe der Zweispur-Fördereinrichtung (113) und/oder der Hub- und Absenkeinrichtungen (118) für eine Positionierung des oder der Ladehilfsmittel (3) entsprechend einer Positionsvorgabe auf der Lastaufnahmevorrichtung (100) erfolgt, wobei als Ladehilfsmittel (3) zwei Halbpaletten vorgesehen sind, welche durch Betrieb der beiden Paare der Längsfördermittel (115) in eine abstandsfreie Position auf der Lastaufnahmevorrichtung (100) gebracht werden.

## Claims

1. Load accommodating device (100) for a rack serving vehicle (27) with a storage and disbursement device (32) for at least one freight handling aid (3) for a packaged unit (4) of goods disposed on a loading platform (30), with telescopically adjustable carrying means (104) for the freight handling aid (3) disposed on the loading platform (30) and with at least one two-track conveyor system (113) for a conveying direction extending parallel with the direction of displacement of the carrying means (104), **characterised in that**
- the two-track conveyor system (113) is provided in the form of at least four longitudinal conveying means (115) disposed on the loading platform (30), which are oriented in alignment one after the other in pairs in the direction of displacement of the carrying means (104) on the loading platform (30),
- two supporting means (127) are disposed on the loading platform (30), preferably in the middle of the two-track conveyor system (113), extending parallel with the longitudinal conveyor means (115) and oriented in alignment with one another in the storage and disbursement direction and
- the longitudinal conveyor means (115) and the supporting means (127) are provided in the form of chain conveyors.

2. Load accommodating device (100) as claimed in claim 1, **characterised in that** the longitudinal conveyor means (115) of the two-track conveyor system (113) and preferably the supporting means (127) are displaceable in the direction perpendicular to a plane (119) formed by a standing surface (109) of the carrying means (104).

3. Load accommodating device (100) as claimed in one of the preceding claims, **characterised in that** a common driver motor (121) co-operates with the paired longitudinal conveyor means (115).

4. Load accommodating device (100) as claimed in one of the preceding claims, **characterised in that** a common lifting and lowering device (118) co-operates with the paired longitudinal conveyor means (115) of the two-track conveyor system (113).

5. Load accommodating device (100) as claimed in claim 4, **characterised in that** the supporting means (127) disposed in the middle between the longitudinal conveyor means (115) is connected to the lifting and lowering device (118) of the longitudinal conveyor means (115) so as to impart motion.

6. Load accommodating device (100) as claimed in claim 4, **characterised in that** the supporting means (127) disposed in the middle between the longitudinal conveyor means (115) is connected to the longitudinal conveyor means (115) extending in a parallel arrangement so as to impart driving force.

7. Load accommodating device (100) as claimed in one of the preceding claims, **characterised in that** each of the longitudinal conveyor means (115) of the two-track conveyor system (113) is provided with a drive.

8. Load accommodating device (100) as claimed in one of the preceding claims, **characterised in that** each of the longitudinal conveyor means (115) of the two-track conveyor system (113) is provided with a lifting and lowering device (118).

9. Load accommodating device (100) as claimed in one of the preceding claims, **characterised in that** the supporting means (127) disposed between a pair of longitudinal conveyor means (115) is provided with a lifting and lowering device (118).

10. Load accommodating device (100) as claimed in one of the preceding claims, **characterised in that** the longitudinal conveyor means (115) of the two-track conveyor system (113) and/or the supporting means (127) are supported on the loading platform (30) by means of pivot levers (124), for example, in the direction perpendicular to the standing surface of the carrying means.

11. Load accommodating device (100) as claimed in one of the preceding claims, **characterised in that** a drive arrangement (121) of the lifting and lowering device (118) is provided in the form of a crank drive (122) for example.

12. Load accommodating device (100) as claimed in one of the preceding claims, **characterised in that** the drives of the longitudinal conveyor means (115) of the two-track conveyor system (113) and/or the lifting and lowering unit (118) are connected to a drive control unit of the rack serving vehicle (27) so as to communicate.

13. Method of operating a load accommodating device (100) for a rack serving vehicle (27) with a storage and disbursement device (32) for at least one freight handling aid (3) for a packaged unit (4) of goods disposed on a loading platform (30), with telescopically adjustable carrying means (104) for the freight handling aid (3) disposed on the loading platform (30) and with at least one two-track conveyor system (113) for a conveying direction extending parallel with the direction of displacement of the carrying means (104), the two-track conveyor system (113) being provided in the form of at least four longitudinal conveying means (115) disposed on the loading platform (30), which are oriented in alignment one after the other in pairs in the direction of displacement of the carrying means (104) on the loading platform (30), **characterised in that** for every storage and/or disbursement routine, control signals are transmitted to the drive control system for the drives of the longitudinal conveyor means (115) of the two-track conveyor system (113) and/or the lifting and lowering devices (118) from a central operations control system of the warehouse transport vehicle pertaining to the load disbursement or load storage action to be undertaken in accordance with a storage and disbursement programme, and the drives of the two-track conveyor system (113) and/or the lifting and lowering devices (118) are activated in order to position the load handling aid(s) (3) based on a predefined position on the load accommodating device (100), and the freight handling aids (3) are provided in the form of two half-pallets which are moved into a non-spaced position on the load accommodating device (100) by operating the two pairs of longitudinal conveyor means (115).

## Revendications

1. Dispositif de prise de charge (100) pour un véhicule de transport à étagères (27) avec un dispositif de stockage et de déstockage (32) disposé sur une plateforme de chargement (30) pour au moins un dispositif d'aide au chargement (3) pour une unité d'emballage (4) d'articles, avec des éléments de support télescopiques réglables (104) disposés sur la plateforme de chargement (30) pour le dispositif d'aide au chargement (3) et avec au moins un dispositif de transport à double piste (113) pour une direction de transport parallèle à la direction de déplacement des éléments porteurs (104), **caractérisé en ce que** le dispositif de transport à double piste (113) est constitué d'au moins quatre éléments de transport longitudinaux (115) disposés sur la plateforme de chargement (30), qui sont orientés dans la direction de déplacement des éléments porteurs (104) alignés par paires les uns derrière les autres sur plateforme (30), que, sur la plateforme de chargement (30), de préférence au milieu du dispositif de transport à double piste (113), se trouvent deux éléments d'appui (127) alignés l'un par rapport à l'autre, se déplaçant parallèlement par rapport aux éléments de transport longitudinaux (115) dans le dispositif de stockage et de déstockage, et que les éléments de transport longitudinaux (115) et/ou les éléments d'appui (127) sont constitués de convoyeurs à chaînes.

2. Dispositif de prise de charge (100) selon la revendication 1, **caractérisé en ce que** les éléments de transport longitudinaux (115) du dispositif de transport à double piste (113) et de préférence les éléments d'appui (127) sont mobiles dans une direction perpendiculaire à un plan formé par une surface de portée (119) des éléments porteurs (104).

3. Dispositif de prise de charge (100) selon l'une quelconque des revendications précédentes, **caractérisé en ce qu'**un moteur d'entraînement (121) commun est attribué par paire aux éléments de transport longitudinaux (115).

4. Dispositif de prise de charge (100) selon l'une quelconque des revendications précédentes, **caractérisé en ce qu'**un dispositif de levage et d'abaissement (118) commun est attribué par paire aux éléments de transport longitudinaux (115), dispositif de transport à double piste (113).

5. Dispositif de prise de charge (100) selon la revendication 4, **caractérisé en ce que** l'élément d'appui (127) disposé au milieu entre les éléments de transport longitudinaux (115) se déplace de manière solidaire avec le dispositif de levage et d'abaissement (118) des éléments de transport longitudinaux (115).

6. Dispositif de prise de charge (100) selon la revendication 4, **caractérisé en ce que** l'élément d'appui (127) disposé au milieu entre les éléments de transport longitudinaux (115) est entraîné de manière solidaire avec les éléments de transport longitudinaux (115) à mouvement parallèle.

7. Dispositif de prise de charge (100) selon l'une quelconque des revendications précédentes, **caractérisé en ce que** chacun des éléments de transport longitudinaux (115) du dispositif de transport à double piste (113) est muni d'un dispositif d'entraînement.

8. Dispositif de prise de charge (100) selon l'une quelconque des revendications précédentes, **caractérisé en ce que** chacun des éléments de transport longitudinaux (115) du dispositif de transport à double piste (113) est muni d'un dispositif de levage et d'abaissement (118).

9. Dispositif de prise de charge (100) selon l'une quelconque des revendications précédentes, **caractérisé en ce que** l'élément d'appui (127) disposé entre une paire d'éléments de transport longitudinaux (115) est muni d'un dispositif de levage et d'abaissement (118).

10. Dispositif de prise de charge (100) selon l'une quelconque des revendications précédentes, **caractérisé en ce que** les éléments de transport longitudinaux (115) du dispositif de transport à double piste (113) et/ou les éléments d'appui (127) sont appuyés, par exemple, par l'intermédiaire de leviers pivotants (124) dans la direction perpendiculaire à la surface portante des éléments porteurs sur la plateforme de chargement (30).

11. Dispositif de prise de charge (100) selon l'une quelconque des revendications précédentes, **caractérisé en ce qu'**un dispositif d'entraînement (121) du dispositif de levage et d'abaissement (118) est constitué d'un mécanisme à manivelle (122).

12. Dispositif de prise de charge (100) selon l'une quelconque des revendications précédentes, **caractérisé en ce que** les dispositifs d'entraînement des éléments de transport longitudinaux (115) du dispositif de transport à double piste (113) et/ou du dispositif de levage et d'abaissement (118) sont reliés de façon communicative avec un dispositif de régulation d'entraînement du véhicule de transport à étagères (27).

13. Procédé d'utilisation d'un dispositif de prise de charge (100), pour un véhicule de transport à étagères (27) avec un dispositif de stockage et de déstockage (32) disposé sur une plateforme de chargement (30) pour au moins un dispositif d'aide au chargement (3) pour une unité d'emballage (4) d'articles, avec des éléments de support télescopiques réglables (104) disposés sur la plateforme de chargement (30) pour le dispositif d'aide au chargement (3) et avec au moins un dispositif de transport à double piste (113) pour une direction de transport parallèle à la direction de déplacement des éléments porteurs (104), le dispositif de transport à double piste (113) étant constitué d'au moins quatre éléments de transport longitudinaux (115) disposés sur la plateforme de chargement (30), qui sont orientés dans la direction de déplacement des éléments porteurs (104) alignés par paires les uns derrière les autres sur plateforme (30), **caractérisé en ce que**, pour chaque jeu de stockage et/ou de déstockage, des signaux de commande sont transmis au dispositif de régulation d'entraînement pour les dispositifs d'entraînement des éléments de transport longitudinaux (115) du dispositif de transport à double piste (113) et/ou des dispositifs de levage et d'abaissement (118) par un dispositif de commande central du véhicule de transport à étagères, concernant le dépôt ou la prise de charge à effectuer selon un programme de stockage et de déstockage, et la commande des dispositifs d'entraînement du dispositif de transport à double piste (113) et/ou des dispositifs de levage et d'abaissement (118) est effectuée pour un positionnement du ou des éléments d'aide au chargement (3) en fonction d'une indication de position sur le dispositif de prise de charge (100), à titre d'éléments d'aide au chargement (3) étant prévu deux demi-palettes de chargement, qui sont amenées dans une position exempte de distance sur le dispositif de prise de charge (100) par utilisation des deux paires des éléments de transport longitudinaux (115).
